# EUROPEAN PATENT SPECIFICATION

(11) **EP 1 223 190 B1**
(45) Date of publication and mention of the grant of the patent: **12.10.2011**
(21) Application number: 02000784.5
(22) Date of filing: 14.01.2002
(51) Int. Cl.: C08K 5/372

(54) **Room temperature curable organopolysiloxane composition for molding**
Bei Umgebungstemperatur härtende Organopolysiloxanzusammensetzungen zum Formen
Compositions d'organopolysiloxanes durcissables à température ambiante pour mouler

(30) Priority: 15.01.2001 JP 2001007078
(43) Date of publication of application: 17.07.2002
(73) Proprietor: Shin-Etsu Chemical Co., Ltd., Chiyoda-ku, Tokyo (JP)
(72) Inventor: Ikeno, Masayuki, Silicone Denshi Zairyo, Gijutsu K, Matsuida-machi, Usui-gun, Gunma-ken (JP); Ohashi, Morio, Silicone Denshi Zairyo, Gijutsu Ken, Matsuida-machi, Usui-gun, Gunma-ken (JP)
(74) Representative: Wolff, Felix

(56) References cited:
- US-A- 5 814 695
- US-B1- 6 172 150

## Description

### BACKGROUND OF THE INVENTION

### 1. Field of the Invention

The present invention relates to a room temperature curable organopolysiloxane composition for molding purposes, which is used for producing a molding matrix, and which upon curing displays superior mold releasability, particularly relative to unsaturated polyester resins.

### 2. Description of the Prior Art

The production from a master mold of a silicone rubber matrix comprising an organopolysiloxane composition, and the subsequent injection of a material such as a urethane resin, an epoxy resin, a dicyclopentadiene resin or a polyester resin into this matrix to form a resin molded replica product is a well-known technique. In recent years, resin molded products produced in this manner have been supplied for use in automobile components and household electrical components, and the characteristics of such resin molded products are being given serious consideration. As a result, the improvements in the characteristics of the casting resins have been quite dramatic. Unfortunately these improvements have resulted in a deterioration in the durability of the silicone rubber matrix, and the number of replica products that can be produced from a single matrix has decreased. Consequently, improvements in the durability of good mold releasability (hereinafter, referred to as mold release durability) of the silicone rubber matrix with respect to these resins have been keenly sought in order to improve the durability of the silicone rubber matrix and to increase the number of replica products.

It has been disclosed in Japanese Laid-open publication (kokai) No. 9-217009 (JP9-217009A) corresponding to U.S. Patent 6,172,150 that sterically hindered phenols, aromatic amines, and zinc dithiophosphates display superior mold release durability relative to unsaturated polyester resins. Furthermore, a technique for improving polyester mold durability using a radical scavenger is disclosed in Japanese Laid-open publication (kokai) No.10-279805 (JP10-279805A) corresponding to U.S. Patent 5,814,695. However, these techniques suffer from a problem of unsatisfactory curing of the unsaturated polyester resin at the contact surface with the silicone rubber.

### SUMMARY OF THE INVENTION

An object of the present invention is to provide a room temperature curable organopolysiloxane composition for molding purposes which displays superior mold releasability relative to unsaturated polyester resins, and which is unlikely to suffer problems of unsatisfactory curing of an unsaturated polyester resin at the contact surface with the silicone rubber.

The inventors of the present invention discovered that by adding an organic compound incorporating at least one sulfur atom within the molecule, an organopolysiloxane composition could be produced which conformed to the above object, and as a result were able to complete the present invention.

In other words, the present invention provides a room temperature curable organopolysiloxane composition for molding purposes comprising an organopolysiloxane, a curing agent, and at least one organic compound incorporating at least one sulfur atom within a single molecule selected from the group consisting of diphenyl sulfide, allylphenyl sulfide, diphenyl disulfide, benzothiazoyl disulfide, dimethyl xanthogen disulfide, diphenyl trisulfide, a thiol compound, a thioglycolate ester, octyl-3-mercaptopropionate, dibutyl tin bisnonyl-3-mercaptopropionate, a pentaerythritol tetrakisthiopropionate, a thiophene carboxylate ester, 2-(4-morpholinyldithio)benzothiazol, a compound represented by the formula:

(CH₃CH₂O)₂(CH₃)SiCH₂CH₂CH₂S₄CH₂CH₂CH₂Si(CH₃)(OCH₂CH₃)₂,

and a compound represented by the formula:

(CH₃CH₂O)₃SiCH₂CH₂CH₂SNH-tert-C₄H₉-

By producing a molding matrix of a room temperature curable organopolysiloxane composition of the present invention, unsatisfactory curing of an unsaturated polyester resin is unlikely to occur at the contact surface with the silicone rubber of the matrix, and furthermore the mold releasability of the matrix relative to unsaturated polyester resins is excellent. A matrix produced using a room temperature curable organopolysiloxane composition for molding purposes according to the present invention is suitable not only for use with unsaturated polyester resin, and can also be suitably applied to a molding matrix for use with other curable resins such as urethane resins, epoxy resins and dicyclopentadiene resins, and other casting resin materials such as thermoplastic resins.

### DETAILED DESCRIPTION OF THE PREFERRED EMBODIMENTS

As follows is a more detailed description of the present invention.

A room temperature curable organopolysiloxane composition for molding purposes according to the present invention comprises an organic compound incorporating at least one sulfur atom within a single molecule, such as the compounds described below.

A preferred room temperature curable organopolysiloxane composition for molding purposes according to the present invention comprises an organosilane or polyorganosiloxane with at least three hydrolyzable groups as the aforementioned curing agent, and a curing catalyst. A more specific example of a preferred composition comprises:
(a) 100 parts by weight of an organopolysiloxane represented by a general formula (1): 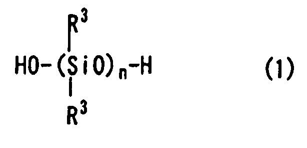 wherein, the R³ groups may be the same or different, and represent an unsubstituted or substituted monovalent hydrocarbon group, and n represents an integer of at least 2,
(b) 0.5 to 20 parts by weight of a compound selected from the group consisting of organosilanes contain at least three hydrolyzable groups bonded to silicon atoms within a single molecule, and organosiloxanes contain at least three hydrolyzable groups bonded to silicon atoms within a single molecule,
(c) 0.1 to 20 parts by weight of at least one organic compound incorporating at least one sulfur atom in a single moleculeselected from the group consisting of diphenyl sulfidc, allylphenyl sulfide, diphenyl disulfide, benzothiazoyl disulfide, dimethyl xanthogen disulfide, diphenyl trisulfide, a thiol compound, a thioglycolate ester, octyl-3-mercaptopropionate, dibutyl tin bisnonyl-3-mercaptopropionate, a pentaerythritol tetrakisthiopropionate, a thiophene carboxylate ester, 2-(4-morpholinyldithio)-benzothiazol, a compound represented by the formula:

   (CH₃CH₂O)₂(CH₃)SiCH₂CH₂CH₂S₄CH₂CH₂CH₂Si(CH₃)(OCH₂CH₃)₂,

   and a compound represented by the formula:

   (CH₃CH₂O)₃SiCH₂CH₂CH₂SNH-tert-C₄H₉,

   and
(d) an effective quantity of a curing catalyst.

As follows is a description of each of the constituents (a) to (d).

### [Constituent (a)]

In the present invention, the constituent (a) is an organopolysiloxane in which both terminals of the molecular chain are terminated with a hydroxyl group, represented by the general formula (1) shown below, 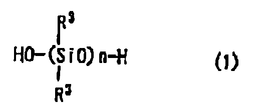 wherein, the R³ groups may be the same or different, and represent an unsubstituted or substituted monavalent hydrocarbon group, and n represents an integer of at least 2, and either a single organopolysiloxane, or a combination of two or more different such organopolysiloxanes may be used.

In the general formula (1), suitable examples for the unsubstituted or substituted monovalent hydrocarbon groups represented by the symbol R³, which may be different or the same, include alkyl groups such as methyl groups, ethyl groups, propyl groups, butyl groups, pentyl groups or hexyl groups; alkenyl groups such as vinyl groups, allyl groups, butenyl groups, pentenyl groups, hexenyl groups or heptenyl groups; cycloalkyl groups such as cyclopentyl groups or cyclohexyl groups; aryl groups such as phenyl groups, tolyl groups, xylyl groups or naphthyl groups; aralkyl groups such as benzyl groups or phenethyl groups; and halogen substituted alkyl groups such as 3,3,3-trifluoropropyl groups or 3-chloropropyl groups, although in terms of ease of synthesis, methyl groups arc preferable.

Furthermore, a part of these monovalent hydrocarbon groups represented by R³ may also be substituted with a hydroxyl group, particularly in those cases where the desired characteristics require such a substitution.

Furthermore in the general formula (1) described above, n represents an integer of at least 2, and should preferably represent an integer with an average value of 100 to 1000, and an organopolysiloxane with a value of n within this range should preferably display a viscosity at 25°C within a range from 0.2 to 100 Pa·s.

### [Constituent (b)]

In the present invention, the constituent (b) is an organosilane and/or an organosiloxane, contain at least three hydrolyzable groups bonded to silicon atoms within each single molecule. There are no particular restrictions on the molecular structure of the organosiloxane, and straight chain organodisiloxanes are suitable, as are organopolysiloxanes with either branching or three dimensional network structures.

This constituent acts as a cross-linking agent, and as a result it is necessary that there be at least three hydrolyzable groups bonded to silicon atoms within each molecule. In other words, these hydrolyzable groups react with the hydroxyl groups bonded to silicon atoms within the organopolysiloxane of the constituent (a) (namely, the silanol groups), and form a cured three dimensional structure with elastomer characteristics.

Examples of suitable hydrolyzable groups include alkoxy groups such as methoxy groups, ethoxy groups, propoxy groups, butoxy groups and methoxyethoxy groups; acyloxy groups such as acetoxy groups, propionoxy groups, butyloxy groups and benzoyloxy groups; alkenyloxy groups such as isopropenyloxy groups, isobutenyloxy groups and 1-ethyl-2-methylvinyloxy groups; iminoxy groups such as dimethylketoxime groups, methylethylketoxime groups, diethylketoxime groups, cyclopentanoxime groups and cyclohexanoxime groups; amino groups such as N-methylamino groups, N-ethylamino groups, N,N-dimethylamino groups and cyclohexylamino groups; amide groups such as N-methylacetamide, N-ethylacetamide and N-methylbenzamide; and aminooxy groups such as N,N-dimethylaminooxy groups and N,N-diethylaminooxy groups.

Furthermore in this constituent, in addition to the aforementioned hydrolyzable groups, examples of other monovalent hydrocarbon groups attached to silicon atoms include the same type of alkyl groups, alkenyl groups, aryl groups and aralkyl groups described above for the R³ group.

In the present invention, specific examples of this type of organosilane which functions as a cross-linking agent include methyltrimethoxysilane, methyltriethoxysilane, vinyltrimethoxysilane, phenyltrimethoxysilane, vinyltriethoxysilane, tetraethoxysilane, tetra-n-propoxysilane, methyltris(propenoxy)silane, vinyltris(propenoxy)silane, (1-methoxy-2-methylpropenoxy)silane, as well as partially hydrolyzed condensates (namely, siloxane oligomers) of such compounds, and mixtures thereof.

Furthermore, specific examples of organosiloxanes (partially hydrolyzed condensates of the aforementioned silane compounds) which function as cross-linking agents include hexamethoxydisiloxane, hexaethoxydisiloxane, octamethoxytrisiloxane, octaethoxytrisiloxane, 1,3,5,7-tetramethoxy-1,3,5,7-tetramethylcyclotetrasiloxane and 1,3,5,7-tetraethoxy-1,3,5,7-tetramethylcyclotetrasiloxane.

The constituent (b) may be comprised of either a single compound, or a combination of two or more different compounds. Furthermore, the amount of this constituent (b) used should be between 0.5 and 20 parts by weight per 100 parts by weight of the organopolysiloxane of constituent (a), with quantities from 1 to 10 parts by weight being preferable. At quantities less than 0.5 parts by weight, the curing of the composition is unsatisfactory, and it becomes difficult to obtain a cured product with elastomer properties, and moreover the mechanical characteristics of the cured product may also deteriorate. In contrast, if quantities greater than 20 parts by weight are used, then other problems arise such as excessive hardness of the cured product.

### [Constituent (c)]

In the present invention, the constituent (c) is an organic compound incorporating at least one sulfur atom in a single molecule, which upon addition to an organopolysiloxane composition produces superior mold release durability relative to unsaturated polyester resins.

However in some cases in which an organic compound comprising a sulfur atom is incorporated within a composition, there are occasions where the portion of the unsaturated polyester resin which contacts the surface of the silicone rubber mold suffers from very poor curing, and in such cases the uncured polyester resin constituent permeates into the silicone rubber mold and causes swelling of the rubber, particularly in pin shaped sections of the mold, resulting in a deterioration in the precision of the mold dimensions.

In the present invention, the organic compound incorporating at least one sulfur atom within a single molecule is selected from the group consisting of diphenyl sulfide, allylphenyl sulfide, diphenyl disulfide, benzothiazoyl disulfide, dimethyl xanthogen disulfide, diphenyl trisulfide, a thiol compound, a thioglycolate ester, octyl-3-mercaptopropionate, dibutyl tin bisnonyl-3-mercaptopropionate, a pentaerythritol tetrakisthiopropionate, a thiophene carboxylate ester, 2-(4-morpholinyldithio)-benzothiazol, a compound represented by the formula:

(CH₃CH₂O)₂(CH₃)SiCH₂CH₂CH₂S₄CH₂CH₂CH₂Si(CH₃)(OCH₂CH₃)₂,

and a compound represented by the formula:

(CH₃CH₂O)₃SiCH₂CH₂CH₂SNH-tert-C₄H₉₋

Specific examples of thiol compounds include 2-mercaptonaphthalene, octadecane thiol and 2,2'-(ethylenedithio)diethane thiol.

Examples of thioglycolate estersare octyl thioglycolate, dibutyl tin bisoctyl thioglycolate, dioctyl tin bisisooctyl thioglycolate, trimethylolpropane tristhioglycolate and pentaerythritol telrakisthioglycolate.

An example of a pentaerythritol tetrakisthiopropionate is a compound represented by the formula C[CH₂OOCCH₂CH₂S(CH₂)₁₁CH₃]₄.

Examples of thiophene carboxylate esters include thiophene-2-carboxylate esters and thiophene-3-carboxylate esters, such as ethyl thiophene carboxylate.

The aforementioned organic compound incorporating a sulfur atom may comprise a single compound, or a combination of two or more compounds.

The amount of this constituent (c) used should be between 0.1 and 20 parts by weight per 100 parts by weight of the organopolysiloxane of constituent (a), with quantities from 0.5 to 10 parts by weight being preferable. At quantities less than 0.1 parts by weight, the desired mold release durability relative to unsaturated polyester resins is not achieved. In contrast, if quantities greater than 20 parts by weight are used, there is a danger of other problems arising such as unsatisfactory curing of the unsaturated polyester resin at the interface with the cured product.

### [Constituent (d)]

In the present invention, the constituent (d) is a curing catalyst used for promoting curing through cross-linking between the constituent (a) and the constituent (b), and utilizes a curing catalyst such as those typically used in condensation type room temperature curable silicone compositions.

Specific examples of such curing catalysts include metal salts of organic acids such as dibutyl tin dilaurate, dibutyl tin dibenzylmaleate, dibutyl tin dioctoate, dioctyl tin dilaurate, dioctyl tin diacetate, iron stearate and lead octoate, titanate esters such as tetraisopropyl titanate, and titanium chelate compounds such as titanium acetylacetonate, as well as mixtures of such compounds.

The amount of this type of curing catalyst used should be sufficient to provide a satisfactory catalytic effect, and typically is from 0.01 to 10 parts by weight per 100 parts by weight of the combined constituents (a) to (c), with quantities within a range from 0.1 to 5 parts by weight being desirable. At quantities less than 0.01 parts by weight, the catalytic function of the curing catalyst is not exhibited to a sufficient degree, and so the curing time lengthens, and there is a tendency for insufficient curing of the deeper portions of the rubber layer. In contrast, if quantities greater than 10 parts by weight are used, the shelf life of the composition deteriorates, and there is a tendency for other characteristics of the cured product, such as the heat resistance, to also deteriorate.

### [Other Constituents]

In the present invention, in addition to the constituents (a) to (d) described above, various other additives may also be included in order to improve certain characteristics of the composition, provided such additives do not impair the effects of the present invention. Examples include reinforcing fillers and precipitation prevention agents such as fumed silica, precipitated silica, or hydrophobic products thereof, and carbon black, as well as non-reinforcing fillers and extenders such as quartz powder, fused quartz, spherical silica, diatomaceous earth, zeolite, calcium carbonate, titanium dioxide, iron oxide, alumina, spherical alumina, aluminum hydroxide, aluminum nitride, and magnesium sulfate. In addition, coloring agents such as inorganic pigments or organic dyes, or reagents for improving the heat resistance or flame resistance such as cerium oxide, zinc carbonate, manganese carbonate, benzotriazol or platinum compounds may also be added. Furthermore, because a composition of the present invention is a condensation curing type composition, water or alcohols such as methanol, ethanol, propanol, glycol, or methyl cellosolve may also be added in order to promote the curing process, and improve the curing of the deeper portions within the mold.

Furthermore in the present invention, unreactive organopolysiloxanes may also be added, and such unreactive organopolysiloxanes can be suitably used as internal mold release agents within the composition. This type of unreactive organopolysiloxane should preferably have a viscosity at 25°C of 0.01 to 500 Pa·s.

### EXAMPLES

As follows is a more detailed description of the present invention using a series of examples, although the present invention is in no way limited to the examples presented.

Examples 1,3,5,10-13 and comparative examples 1-9, 14, 2', 4' and 6'

As described below, room temperature curable organopolysiloxane compositions for molding purposes were prepared using each of the compositions A to C as a base, and then adding each of the compounds 1 to 8 in the proportions shown in Table 1 to Table 3. The mold durability was then evaluated for each composition, and these results are shown in Table 1 to Table 3.

### (Base Composition A)

A mixture of 20 parts by weight of a α,ω-dihydroxypolydimethylsiloxane with a viscosity at 25°C of 5 Pa·s, 20 parts by weight of a α,ω-bis(trimethylsiloxy)polydimethylsiloxane with a viscosity at 25°C of 0.1 Pa·s, 12.5 parts by weight of hydrophobic silica with a specific surface area of 120 m²/g which had been treated with trimethylsilyl groups, 12.5 parts by weight of wet silica with a specific surface area of 200 m²/g, 2 parts by weight of hexamethyldisilazane, and 1 part by weight of water was placed in a kneader, and then mixed for 4 hours at a temperature of 160°C. Subsequently, 25 parts by weight of a α,ω-dihydroxypolydimethylsiloxane with a viscosity at 25°C of 5 Pa·s, 1.5 parts by weight of a α,ω-dihydroxypolydimethylsiloxane with a viscosity at 25°C of 0.02 Pa·s, 13.5 parts by weight of a α,ω-bis(trimethylsiloxy)polydimethylsiloxane with a viscosity of 0.1 Pa·s, 5.0 parts by weight of powdered quartz with an average particle diameter of 5 µm, and 1.0 parts by weight of titanium dioxide were added to the mixture. To 100 parts by weight of the thus obtained mixture were added 1.0 part by weight of an ethyl polysilicate which represents a hydrolyzed condensate of tetraethoxysilane, and 0.2 parts by weight of tetrabutylbis(ethylmaleate)distanoxane, and following careful stirring, the mixture was degassed under vacuum to complete the production of the Base Composition A.

The Base Composition A was cured for 72 hours at 23°C. The thus obtained cured product displayed a Shore A hardness of 28, and a tear strength according to JIS K 6249 of 15 kN/m.

### (Base Composition B)

A mixture of 17 parts by weight of a α,ω-dihydroxypolydimethylsiloxane with a viscosity at 25°C of 5 Pa·s, 15 parts by weight of a α,ω-dihydroxypolydimethylsiloxane with a viscosity at 25°C of 1.5 Pa·s, 1 part by weight of a α,ω-bis(trimethylsiloxy)polydimethylsiloxane with a viscosity at 25°C of 0.03 Pa·s, 20 parts by weight of fumed silica with a specific surface area of approximately 200 m²/g as measured by BET methods, 5.0 parts by weight of hexamethyldisilazane, and 2.5 parts by weight of water was placed in a kneader, and then kneaded for 4 hours at a temperature of 160°C. Subsequently, 18 parts by weight of a α,ω-dihydroxypolydimethylsiloxane with a viscosity at 25°C of 5 Pa·s, 14 parts by weight of a α,ω-bis(trimethylsiloxy)polydimethylsiloxane with a viscosity at 25°C of 0.03 Pa·s, 3.0 parts by weight of a α,ω-dihydroxypolydimethylsiloxane with a viscosity at 25°C of 0.02 Pa·s, and 5.0 parts by weight of powdered quartz with an average particle diameter of 5 µm were added to the mixture. To 100 parts by weight of the thus obtained mixture were added 2.5 parts by weight of tetra-n-propoxysilane, 0.5 parts by weight of phenyltrimethoxysilane, and 0.9 parts by weight of dioctyl tin dilaurate, and following careful stirring, the mixture was degassed under vacuum to complete the production of the Base Composition B.

The Base Composition B was cured for 72 hours at 23°C. The thus obtained cured product displayed a Shore A hardness of 34, and a tear strength according to JIS K 6249 of 15 kN/m.

### (Composition C)

A mixture of 35 parts by weight of a α,ω-dihydroxypolydimethylsiloxane with a viscosity at 25°C of 5 Pa·s, 20 parts by weight of fumed silica with a specific surface area of approximately 200 m²/g as measured by BET methods, 5.0 parts by weight of hexamethyldisilazane, and 2.5 parts by weight of water was placed in a kneader, and then kneaded for 4 hours at a temperature of 160°C. Subsequently, 15 parts by weight of a α,ω-dihydroxypolydimethylsiloxane with a viscosity at 25°C of 5 Pa·s, and 15 parts by weight of a α,ω-bis(trimethylsiloxy)polydimethylsiloxane with a viscosity at 25°C of 0.03 Pa·s were added to the mixture. To 100 parts by weight of the thus obtained mixture were added 5 parts by weight of a dimethylpolysiloxane in which both terminals of the molecular chain were blocked by a trimethylsilyl group and having a viscosity at 25°C of approximately 100 Pa·s, 2.5 parts by weight of tetra-n-propoxysilane, and 0.6 parts by weight of dioctyl tin dilaurate, and following careful stirring, the mixture was degassed under vacuum to complete the production of the Base Composition C.

The Base Composition C was cured for 72 hours at 23°C. The thus obtained cured product displayed a Shore A hardness of 26, and a tear strength according to JIS K 6249 of 11 kN/m.

### (Method of Evaluating Mold Durability)

To each of the aforementioned Base Compositions A, B and C as a base was added a compound selected from the various compounds 1 to 8 as described below in a proportion shown in Table 1 to generate a series of compositions incorporating an organic compound with a sulfur atom. Using each of the thus obtained compositions, and using as a master model a teflon cylinder with a diameter of 20 mm and a height of 20 mm with an aperture of a diameter of 4 mm and a depth of 12 mm in the center of the terminal surface of the cylinder, a matrix was prepared by curing the composition for 72 hours at 23°C. An unsaturated polyester resin TP-123 (manufactured by Dainippon Ink and Chemicals Inc.) was injected into each matrix, and the unsaturated polyester resin was then cured for one hour at 70°C. This molding operation was repeated until the rubber pin of the silicone matrix swelled and ruptured due to the effect of the unsaturated polyester resin, and the mold durability was evaluated based on the number of such molding operations performed before rupture.

### (Compounds incorporating a sulfur atom)

• Compound 1 C[CH₂OOCCH₂CH₂S(CH₂)₁₁CH₃]₄
• Comparative Compound 2 (C₈H₁₇)₂Sn(SCH₂COOC₈H₁₇)₂
• Compound 3 PhSSPh (wherein Ph represents a phenyl group) Comparative Compound 4 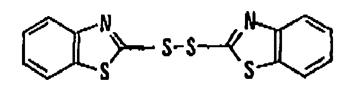
• Comparative Compound 5 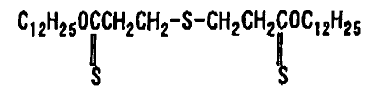
• Compound 6 (CH₂CH₂O)₂(CH₃)SiCH₂CH₂CH₂S₄CH₂CH₂CH₂Si(CH₃)(OCH₂CH₃)₂
• Compound 7 (CH₃CH₂O)₃SiCH₂CH₂CH₂SNH-tert-C₄H₉
• Compound 8

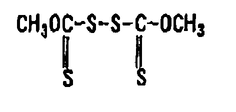

**[Table 1]**

| Base: Base Composition A | | | |
|---|---|---|---|
| | Added compound | Quantity added (weight %) | Molding repetitions |
| Example 1 | Compound 1 | 2 | 70 |
| Comparative Example 2' | Comparative Compound 2 | 2 | 52 |
| Example 3 | Compound 3 | 1 | 46 |
| Comparative Example 4' | Comparative Compound 4 | 2 | 66 |
| Comparative example 1 | None | 0 | 23 |

**[Table 2]**

| Base: Base Composition B | | | |
|---|---|---|---|
| | Added Compound | Quantity added (weight %) | Molding repetitions |
| Example 5 | Compound 1 | 1 | 65 |
| Comparative Example 6' | Comparative Compound 2 | 1 | 45 |
| Comparative Example 7 | Comparative Compound 4 | 1 | 50 |
| Comparative Example 8 | Comparative Compound 5 | 2 | 73 |
| Comparative example 2 | None | 0 | 27 |

**[Table 3]**

| Base: Base Composition C | | | |
|---|---|---|---|
| | Added compound | Quantity added (weight %) | Molding repetitions |
| Comparative Example 9 | Comparative Compound 5 | 1 | 60 |
| Example 10 | Comparative Compound 6 | 1 | 75 |
| Example 11 | Compound 7 | 1 | 47 |
| Example 12 | Compound 8 | 1 | 75 |
| Comparative example 3 | None | 0 | 25 |

Examples 13 to 14, and Comparative Examples 4 to 6

### (Variations in Pin Length during Mold Durability Evaluations)

To the aforementioned Base Composition A was added or not added a compound selected from the compounds 1, 4, 9, and 10 as described above and below in the proportions shown in Table 4 to generate a series of compositions incorporating or not incorporating an organic compound with a sulfur atom. Using each of these compositions, and using as a master model a teflon cylinder of a diameter of 20 mm and a height of 20 mm with an aperture of a diameter of 4 mm and a depth of 12 mm in the middle of the cylinder, a matrix was prepared by curing the composition for 72 hours at 23°C. An unsaturated polyester resin TP-123 (manufactured by Dainippon Ink and Chemicals Inc.) was then injected into each matrix, and the unsaturated polyester resin was then cured for one hour at 70°C. This molding operation was repeated until the rubber pin of the silicone matrix was ruptured by the unsaturated polyester resin, and the number of such molding operations performed before rupture was counted, and the degree of swelling of the rubber pin was also evaluated by determining the degree of variation in the length of the pin. The results are shown in Table 4.

• Comparative Compound 9 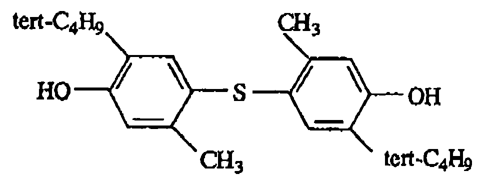 • Comparative Compound 10

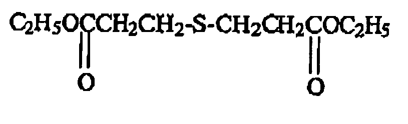

**[Table 4] Base: Base Composition A**

| | Added compound | Quantity added (weight %) | Molding repetitions | Variation in pin length (%) |
|---|---|---|---|---|
| Example 13 | Compound 1 | 2 | 70 | +3 |
| Comparative Example 14 | Comparative Compound 4 | 2 | 66 | +7 |
| Comparative example 4 | None | 0 | 23 | +16 |
| Comparative example 5 | Compound 9 | 0.5 | 55 | +15 |
| Comparative example 6 | Compound 10 | 2 | 60 | +16 |

Although in the comparative example 5 and the comparative example 6, the addition of the compounds 9 and 10 respectively produced an improvement in the number of molding repetitions, the variation in the length of the rubber pin was large, indicating a deterioration in the precision of the mold dimensions.

## Claims

1. A room temperature curable organopolysiloxane composition for molding purposes comprising an organopolysiloxane, a curing agent, and at least one organic compound incorporating at least one sulfur atom within a single molecule selected from the group consisting of diphenyl sulfide, allylphenyl sulfide, diphenyl disulfide, benzothiazoyl disulfide, dimethyl xanthogen disulfide, diphenyl trisulfide, a thiol compound, a thioglycolate ester, octyl-3-mercaptopropionate, dibutyl tin bisnonyl-3-mercaptopropionate, a pentaerythritol tetrakisthiopropionate, a thiophene carboxylate ester, 2-(4-morpholinyldithio)benzothiazol, a compound represented by the formula:
(CH₃CH₂O)₂(CH₃)SiCH₂CH₂CH₂S₄CH₂CH₂CH₂Sₗ(CH₃)(OCH₂CH₃)₂,
and a compound represented by the formula:
(CH₃CH₂O)₃SiCH₂CH₂CH₂SNH-tert-C₄H₉.

2. The composition according to claim 1, comprising:
(a) 100 parts by weight of an organopolysiloxane represented by a general formula (1): 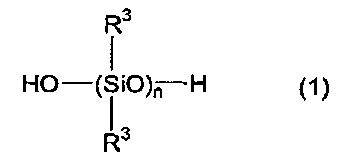 wherein, R³ groups are identical or different and represent either one of an unsubstituted and a substituted monovalent hydrocarbon group, and n represents an integer of at least 2,
(b) 0.5 to 20 parts by weight of a compound selected from a group consisting of organosilanes comprising at least three hydrolyzable groups bonded to silicon atoms within a single molecule, and organosiloxanes comprising at least three hydrolyzable groups bonded to silicon atoms within a single molecule,
(c) 0.1 to 20 parts by weight of at least one organic compound incorporating at least one sulfur atom in a single molecule selected from the group consisting of diphenyl sulfide, allylphenyl sulfide, diphenyl disulfide, benzothiazoyl disulfide, dimethyl xanthogen disulfide, diphenyl trisulfide, a thiol compound, a thioglycolate ester, octyl-3-mercaptopropionate, dibutyl tin bisnonyl-3-mercaptopropionate, a pentaerythritol tetrakisthiopropionate, a thiophene carboxylate ester, 2-(4-morpholinyldithio)-benzothiazol, a compound represented by the formula:
(CH₃CH₂O)₂(CH₃)SiCH₂CH₂CH₂S₄CH₂CH₂CH₂Si(CH₃)(OCH₂CH₃)₂,
and a compound represented by the formula:
(CH₃CH₂O)₃SiCH₂CH₂CH₂SNH-tert-C₄H₉,
and
(d) an effective quantity of a curing catalyst.

3. The composition according to claim 2, wherein in said general formula (1) representing said constituent (a), each R³ represents, independently, any one of an alkyl group, an alkenyl group, a cycloalkyl group, an aryl group, an aralkyl group, and a halogen substituted alkyl group.

4. The composition according to claim 2, wherein in said general formula (1) representing said constituent (a), n represents an integer with an average value of 100 to 1000.

5. The composition according to claim 2, wherein said hydrolyzable groups of said constituent (b) are any one of alkoxy groups, acyloxy groups, alkenyloxy groups, iminoxy groups, amino groups, amide groups and aminooxy groups.

6. The composition according to claim 2, wherein said constituent (d) is any one of a metal salt of an organic acid, a titanate ester, a titanium chelate compound, and a mixture thereof.

7. The composition according to claim 2, wherein for 100 parts by weight of said constituent (a) there exist 1 to 10 parts by weight of said constituent (b), 0.5 to 10 parts by weight of said constituent (c), and 0.1 to 5 parts by weight of said constituent (d).

8. The composition according to claim 1 or 2, wherein said sulfur-containing compound is a thiol compound, and the thiol compound is 2-mercaptonaphthalene, octadecane thiol, 2,2'-(ethylenedithio)diethane thiol or a combination of two or more thereof.

9. The composition according to claim 1 or 2, wherein said sulfur-containing compound is a thioglycolate ester, and the thioglycolate ester is octyl thioglycolate, dibutyl tin bisoctyl thioglycolate, dioctyl tin bisisooctyl thioglycolate, trimethylolpropane tristhioglycotate, pentaerythritol tetrakisthioglycolate or a combination of two or more thereof.

10. The composition according to claim 1 or 2, wherein said sulfur-containing compound is a pentaerythritol tetrakisthiopropionate, and the pentaerythritol tetrakisthiopropionate is a compound represented by the formula C[CH₂OOCCH₂CH₂S(CH₂)₁₁CH₃]₄.

11. The composition according to claim 1 or 2, wherein said sulfur-containing compound is a thiophene carboxylate ester, and the thiophene carboxylate ester is a thiophene-2-carboxylate ester, a thiophene-3-carboxylate ester or a combination of two or more thereof.

## Patentansprüche

1. Bei Zimnertemperatur härtende Oganopolysiloxanzusainmensetzung für Formzwecke, mit einem Organopolysiloxan, einem Härtemittel und mindestens einer organischen Verbindung, die mindestens ein Schwefelatom mit einem einzelnen Molekül aufweist, das aus der Gruppe ausgewählt wird, die folgendes unfasst: Diphenylsulfid, Allylphenylsulfid, Diphenyldisulfid, Benzothiazoyldisulfid, Dimethylxanthogendisulfid, Diphenyltrisulfid, eine Thiolverbindung, ein Thioglycotatester, Octyl-3-Mercaptopropionat, Dibutylzinnbisnonyl-3-Mercaptopropionat, ein Pentaerythritol-Tetrakisthiopropionat, ein Thiopen-Carboxylatester, 2-(4-Morpholinyldithio)Benzothiazol, eine durch die folgende Formel dargestellte Verbindung:
(CH₃CH₂O)(CH)SiCH₂CH₂CH₂S₄CH₂CH₂CH₂Si(CH₃)(OCH₂CH₃)₂ und eine durch die folgende Formel dargestellte Verbindung
CH₃CH₂O)₃SiCH₂CH₂CH₂SNH-tert-C₄H₉.

2. Zusammensetzung nach Anspruch 1, wobei diese folgendes umfasst:
(a) 100 Gewichtsanteile eines Organopolysiloxans, das durch die allgemeine Formel (1) dargestellt ist: 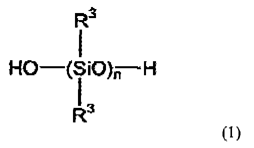 wobei R³-Gruppen identisch oder unterschiedlich sind und eine beliebige unsubstituierte oder substituierte monovalente Kohlenwasserstoffgruppe darstellen, und wobei n eine ganze Zahl von mindestens 2 darstellt;
(b) 0,5 bis 20 Gewichtsanteile einer Verbindung, die aus der Gruppe ausgewählt wird, die Organosilane umfasst, die mindestens drei hydrolysierbare Gruppen umfassen, die in einem einzelnen Molekül an Siliziumatome gebunden sind, und Organosiloxane, die mindestens drei hydrolysierbae Gruppen umfassen, die in einem einzelnen Molekül an Siliziumatome gebunden sind;
(c) 0,1 his 20 Gewichtsanteile mindestens einer organischen Verbindung, die mindestens ein Schwefelatom in einem einzelnen Molekül aufweist, ausgewählt aus der Gruppe, die folgendes umfasst: Diphenylsulfid, Allylphenylsulfid, Diphenyldisulfid, Benzothiazoyldisulfid, Dimethylxanthogendisulfid, Diphenyltrisulfid, eine Thiolverbindung, ein Thioglycolatester, Octyl-3-Mercaptopropionat, Dibutylzinnbisnonyl-3-Mercaptopropionat, ein Pentaerythritol-Tetrakisthiopropionat, ein Thiopen-Carboxylatester, 2-(4-Morpholinyldithio)Benzothiaiol, eine durch die folgende Formel dargestellte Verbindung:
(CH₃CH2O)₂(CH₃)SiCH₂CH₂CH₂S₄CH₂CH₂CH₂Si(CH₃)(OCH₂CH₃)₂
und eine durch die folgende Formel dargestellte Verbindung
(CH₃CH₂O)₃SiCH₂CH₂CH₂SNH-tert-C₄H₉;
und
(d) eine wirksame Menge eines Härtungskatalysators.

3. Zusammensetzung nach Anspruch 2, wobei in der genannten allgemeinen Formel (1), welche den genannten Bestandteil (a) darstellt, jede R³-Gruppe unabhängig eine beliebige der folgenden Gruppen darstellt: eine Alkylgruppe, eine Alkenylgruppe, eine Cycloalkylgruppe, eine Arylgruppe, eine Aralkylgruppe und eine Halogen-substituierte Alkylgruppe.

4. Zusammensetzung nach Anspruch 2, wobei in der genannten allgemeinen Formel (1), welche den genannten Bestandteil (a) darstellt, n eine ganze Zahl mit einem durchschnittlichen Wert von 100 bis 1000 darstellt.

5. Zusammensetzung nach Anspruch 2, wobei die genannten hydrolysierbaren Gruppen des genannten Bestandteils (b) aus beliebigen der folgenden Gruppen ausgewählt werden:
Alkoxygruppen, Acyloxygruppen, Alkenyloxygruppen, Iminoxygruppen, Aminogruppen, Amidgruppen und Aminooxygruppen.

6. Zusammensetzung nach Anspruch 2, wobei es sich bei dem genannten Bestandteil (d) um einen beliebigen der folgenden Bestandteile handelt: ein Metallsatz einer organischen Säure, ein Titanatester, eine Titanchelatverbindung und eine Mischung dieser.

7. Zusammensetzung nach Anspruch 2, wobei für 100 Gewichtsanteile des genannten Bestandteils (a) 1 bis 10 Gewichtsanteile des genannten Bestandteils (b) bestchen, 0,5 bis 10 Gewichtsanteile des genannten Bestandteils (c) und 0,1 bis 5 Gewichtsanteile des genannten Bestandteils (d).

8. Zusammensetzung nach Anspruch 1 oder 2, wobei es sich bei der genannten schwefelhaltigen Verbindung um eine Thiolverbindung handelt, und wobei es sich bei der Thiolverbindung um 2-Mercaptonaphthalen, Octadecanthiol, 2,2'-(Ethylenedithio)diethanthiol oder eine Kombination aus zwei oder mehr dieser handelt.

9. Zusammensetzung nach Anspruch 1 oder 2, wobei es sich bei der genannten schwefelhaltigen Verbindung um ein Thioglycolatester handelt, und wobei es sich bei dem Thioglycolatester um Octylthioglycolat, Dibutylzinnbisoctylthioglyconat, Dioctylzinnbisisooctylthioglycolat, Trimethylolpropantristhioglycolat, Pentaerythritoltetrakisthioglycolat oder eine Kombination aus zwei oder mehr dieser handelt.

10. Zusammensetzung nach Anspruch 1 oder 2, wobei es sich bei der genannten schwefelhaltigen Verbindung um ein Pentaerythritoltetrakisthiopropionat handelt, und wobei es sich bei dem Pentacrythritoltetrakisthiopropionat um eine Verbindung handelt, die durch die folgende Formel dargestellt ist:
C[CH₂OOCCH₂CH₂S(CH₂)₁₁CH₃]₄.

11. Zusammensetzung nach Anspruch 1 oder 2, wobei es sich bei der genannten schwefelhaltigen Verbindung um ein Thiophencarboxylatester handelt, und wobei es sich bei dem Thiophencarboxylatester um ein Thiophen-2-Carboxylatester, ein Thiophen-3-Carboxylatester oder eine Kombination aus zwei oder mehrerer dieser handelt.

## Revendications

1. Composition d'organopolysiloxane durcissable à température ambiante à des
fins de moulage comprenant un organopolysiloxane, un durcisseur et au moins un composé organique incorporant au moins un atome de soufre au sein d'une seule molécule
sélectionnée parmi le groupe constitué du sulfure diphénylique, sulfure allyphénylique, disulfure diphénylique, disulfure benzothiazoylique, disulfure xanthogénique diméthylique, trisulfure diphénylique, un composé de thiol, un ester de thioglycolate, l'octyl-3-mercaptopropionate, le bisnonyl-3-mercaptopropionate d'étain dibutylique, un tétrakisthiopropionate de pentaérythritol, un ester de carboxylate de thiophène, le 2-(4-morpholinyldithio)benzothiazole, un composé représenté par la formule :
(CH₃CH₂O)₂(CH₃)SiCH₂CH₂CH₂S₄CH₂CH₂CH₂Si(CH₃)(OCH₂CH₃)₂,
et un composé représenté par la formule :
(CH₃CH₂O)₃SiCH₂CH₂CH₂SNH-tert-C₄H₉.

2. Composition selon la revendication 1, comprenant :
(a) 100 parties en poids d'un organopolysiloxane représenté par une formule générale (1) : 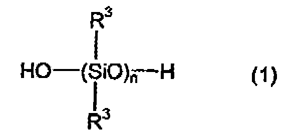 dans laquelle les groupes R³ sont identiques ou différents et représentent soit l'un, soit l'autre d'un groupe hydrocarbure monovalent non substitué et substitué, et n représente un entier d'au moins 2,
(b) 0,5 à 20 parties en poids d'un composé sélectionné parmi un groupe constitué d'organosilanes comprenant au moins trois groupes hydrolysables liés à des atomes de silicium au sein d'une seule molécule, et d'organosiloxanes comprenant au moins trois groupes hydrolysables liés à des atomes de silicium au sein d'une seule molécule,
(c) 0,1 à 20 parties en poids d'au moins un composé organique incorporant au moins un atome de soufre au sein d'une seule molécule sélectionnée parmi le groupe constitué du sulfure diphénylique, sulfure allyphénylique, disulfure diphénylique, disulfure benzothiazoylique, disulfure xanthogénique diméthylique, trisulfure diphénylique, un composé de thiol, un ester de thioglycolate, l'octyl-3-mercaptopropionate, le bisnonyl-3-mercaptopropionate d'étain dibutylique, un tétrakisthiopropionate de pentaérythritol, un ester de carboxylate de thiophène, le 2-(4-morpholinyldithio)benzothiazole, un composé représenté par la formule :
(CH₃CH₂O)₂(CH₃)SiCH₂CH₂CH₂S₄CH₂CH₂CH₂Si(CH₃)(OCH₂CH₃)₂,
et
un composé représenté par la formule :
(CH₃CH₂O)₃SiCH₂CH₂CH₂SNH-tert-C₄H₉, et
(d) une quantité efficace d'un catalyseur de durcissement.

3. Composition selon la revendication 2, dans laquelle dans ladite formule générale (1) représentant ledit constituant (a), chaque R³ représente indépendamment l'un quelconque parmi un groupe alkyle, un groupe alkényle, un groupe cycloalkyle, un groupe aryle, un groupe aralkyle et un groupe alkyle substitué par un halogène.

4. Composition selon la revendication 2, dans laquelle dans ladite formule générale (1) représentant ledit constituant (a), n représente un entier avec une valeur moyenne de 100 à 1000.

5. Composition selon la revendication 2, dans laquelle lesdits groupes hydrolysables dudit constituant (b) sont l'un quelconque parmi des groupes alcoxy, des groupes acyloxy, des groupes alkényloxy, des groupes iminoxy, des groupes amino, des groupes amide et des groupes aminooxy.

6. Composition selon la revendication 2, dans laquelle ledit constituant (d) est l'un quelconque parmi un sel métallique d'un acide organique, un ester de titanate, un composé de chélate de titane et un mélange de ceux-ci.

7. Composition selon la revendication 2, dans laquelle pour 100 parties en poids dudit constituant (a), il existe 1 à 10 parties en poids dudit constituant (b), 0,5 à 10 parties en poids dudit constituant (c) et 0,1 à 5 parties en poids dudit constituant (d)

8. Composition selon la revendication 1 ou 2, dans laquelle ledit composé contenant du soufre est un composé de thiol, et le composé de thiol est le 2-mercaptonaphtalène, le thiol d'octadécane, le 2,2'-(éthylènedithio)diéthane thiol ou une combinaison de deux ou plus de ceux-ci.

9. Composition selon la revendication 1 ou 2, dans laquelle ledit composé contenant du soufre est un ester de thioglycolate, et l'ester de thioglycolate est le thioglycolate octylique, le thioglycolate bisoctylique d'étain dibutylique, le thioglycolate bisisooctylique d'étain dioctylique, de tristhioglycolate de triméthylolpropane, le tétrakisthioglycolate de pentaérythritol ou une combinaison de deux ou plus de ceux-ci.

10. Composition selon la revendication 1 ou 2, dans laquelle ledit composé contenant du soufre est un tétrakisthiopropionate de pentaérythritol, et le tétrakisthiopropionate de pentaérythritol est un composé représenté par la formule C[CH₂OOCCH₂CH₂S(CH₂)₁₁CH₃]₄.

11. Composition selon la revendication 1 ou 2, dans laquelle ledit composé contenant du soufre est un ester de carboxylatc de thiophène, et l'ester de carboxylate de thiophène est un ester de thiophène-2-carboxylate, un ester de thiophène-3-carboxylate ou une combinaison de deux ou plus de ceux-ci.
